# FASCICULE DE BREVET EUROPEEN

(11) **EP 3 924 062 B1**
(45) Date de publication et mention de la délivrance du brevet: **06.11.2024**
(21) Numéro de dépôt: 20703505.6
(22) Date de dépôt: 13.02.2020
(51) Int. Cl.: A62B 3/00, B60R 21/02, B60R 21/00, B60R 21/01

(54) **DISPOSITIF DE BRIS DE VITRE AUTOMATIQUE**
AUTOMATISCHE GLASBRECHVORRICHTUNG
AUTOMATIC GLASS-BREAKING DEVICE

(30) Priorité: 15.02.2019 FR 1901541
(43) Date de publication de la demande: 22.12.2021
(73) Titulaire: Aguila Technologie, 64210 Bidart (FR)
(72) Inventeur: FORGEOT, Hubert, 64200 Bassussarry (FR)
(74) Mandataire: IP Trust
(86) Numéro de dépôt international: PCT/EP2020/053805
(87) Numéro de publication internationale: WO 2020/165368

(56) Documents cités:
- EP-A2- 1 101 895
- EP-A2- 1 101 895
- WO-A1-2017/212917
- CN-A- 105 416 219
- CN-A- 105 882 587
- CN-A- 105 882 587
- CN-A- 108 202 688
- CN-A- 108 202 688
- CN-A- 108 202 688

## Description

La présente invention concerne le domaine des systèmes de bris de vitre automatique permettant de dégager une ouverture dans une paroi équipée d'une vitre, par exemple un autocar ou un wagon ferroviaire. Les pare-brise et vitres latérales et arrières des véhicules de transport collectif sont réalisés en verre feuilleté est un assemblage de feuilles de verre et d'intercalaires de nature plastique. Les intercalaires peuvent se présenter sous forme de film, généralement poly(butyral vinylique) ou éthylène-acétate de vinyle (EVA), ou bien sous forme liquide, coulée entre deux verres (résine).

Les autocars et rames ferroviaires sont habituellement équipés de marteaux "brise vitres" en nombre équivalent aux fenêtres de secours, utilisés pour casser les vitres en cas d'accident, lorsqu'il faut dégager une évacuation des fumées et des passagers en urgence. Le maniement de tels marteaux est problématique car il faut taper la vitre avec force et selon un angle bien défini, avec le risque de blessure par les éclats projetés au moment de l'impact, et ce en situation de crise et de stress.

L'invention concerne un système permettant de réaliser un bris de vitre automatique dans des cas d'urgence, tels qu'une collision, un incendie et une inondation, ce qui augmente les chances des conducteurs et des passagers de parvenir à s'échapper en cas d'urgence.

### État de la technique

On connaît dans l'état de la technique la demande de brevet CN105882587 un brise-vitre manuel, comprenant un cône de rupture de fenêtre disposé dans un coque présentant un trou de limitation adapté au cône de rupture de fenêtre. Il s'agit d'une alternative au marteau, destinée à être actionné manuellement. Le brise-vitre selon cette solution connue produit une poussée puissante produite en allumant le matériau qui explose dans l'unité d'amorçage favorise le cône de fenêtre cassé pour se heurter dans le verre de sécurité.

Cette solution nécessite la manipulation par un passager, qui doit procéder au retrait de la goupille référencée.

En cas d'accident, il est probable que les utilisateurs soient trop perturbés pour effectuer une opération aussi délicate.

La demande de brevet internationale WO2017/212917 décrit une composition d'agent générateur de gaz en gel ou solide formant un corps moulé de masse cohérente sans dispersion de résidus de combustion, de telle sorte que le gaz généré est propre et présente une température basse. La composition comprend une substance autolytique, un épaississant inorganique é à base d'alumine et un constituant combustible.

Cette solution est destinée au gonflement d'un airbag nécessitant un grand volume d'air à basse température, et pas à l'actionnement d'un marteau.

La demande de brevet chinois CN105416219A décrit un dispositif de brise-vitre qui comprend une unité de détection, un centre de mesure et de contrôle et une unité d'exécution de bris de vitre; l'unité de détection est munie d'un capteur de mesure de distance infrarouge pour détecter l'existence de personnes dans une voiture, d'un capteur de température pour détecter la température dans la voiture, d'un capteur de concentration d'oxygène pour détecter la teneur en oxygène dans la voiture et d'un capteur de concentration d'oxyde de carbone utilisé pour détecter la concentration de monoxyde de carbone dans la voiture; le centre de mesure et de contrôle reçoit et stocke les données provenant de l'unité de détection et effectue entre-temps l'accumulation et l'analyse des différentes données captées reçues, lorsqu'un résultat d'analyse dépasse une valeur de sécurité, un module d'alarme est démarré, et l'unité d'exécution de rupture de fenêtre est commandée pour effectuer une opération de rupture de fenêtre; et l'unité d'exécution de rupture de fenêtre effectue une opération de rupture de fenêtre après avoir reçu des informations de rupture de fenêtre transmises par le centre de mesure et de contrôle; à la condition que lorsqu'une personne enfermée dans la voiture ne puisse pas ouvrir seule une portière de voiture ou une vitre de voiture dans des conditions de manque d'oxygène, de température élevée, d'intoxication au monoxyde de carbone et similaires, la vitre est automatiquement brisée, l'effet de ventilation est obtenu, et la sécurité des personnes dans la voiture est davantage protégée.

Cette solution propose un brise-vitre électromagnétique basé sur le principe de lancement électromagnétique, après avoir reçu l'ordre de rupture de la fenêtre envoyé par le centre de mesure et de contrôle.

### Inconvénients de l'art antérieur

Les solutions de l'art antérieur sont relativement complexes dans leur assemblage et donc sujettes à des défaillances, de tels dispositifs devant être robustes et opérationnelles pendant plusieurs années sans entretien, et rester actifs en cas de déclenchement même après de très longues périodes d'inactivité. Par ailleurs, les charges pyrotechniques restent difficiles à maîtriser sur la durée. On peut rappeler les problèmes rencontrés avec les déclencheurs de coussins de sécurité de la société TAKATA (nom commercial) agent gonfleur dont la charge pyrotechnique utilisée - du nitrate d'ammonium - se détériore en cas d'exposition à une humidité excessive.

La solution proposée par le brevet CN105882587 est un dispositif qu'un utilisateur doit appliquer contre la vitre avant de retirer une goupille libérant le percuteur permettant de déclencher une charge explosive. Pendant cette phase l'utilisateur doit appliquer le dispositif contre la vitre avec une force suffisante pour éviter que le recul ne provoque l'écartement du dispositif et non pas la rupture de la vitre.

La solution proposée par le brevet chinois CN105416219A n'est pas non plus satisfaisante car elle prévoit un déplacement électromagnétique qui pose problème lorsque le véhicule est accidenté : l'électricité peut être coupée du fait d'une rupture du câble électrique ou une coupure de l'alimentation. Le dispositif devient alors inopérant.

On connaît aussi la demande de brevet CN108202688A décrivant un brise-glace automatique combiné avec un détecteur de fumée.

### Solution apportée par l'invention

Afin de remédier à ces inconvénients, l'invention concerne selon son acception la plus générale un dispositif de bris de vitre automatique comportant un pointeau activé par une charge pyrotechnique présentant les caractéristiques techniques énoncées par la revendication 1. Le dispositif comprend une semelle présentant une surface extérieure plane apte à être collée sur une vitre, ladite semelle étant prolongée à la surface opposée par une cage cylindrique définissant une cavité tubulaire à l'intérieure de laquelle est insérée l'extrémité tubulaire d'un composant pyrotechnique comprenant dans sa partie arrière une charge pyrotechnique et dans sa partie avant ledit pointeau.

Le dispositif comportant un moyen d'activation local intégré audit dispositif et un moyen de liaison filaire ou sans fil avec un moyen d'activation distant. Le moyen local est par exemple un contacteur électrique accessible sur le corps du dispositif. Le moyen distant est par exemple un module de sécurité du véhicule auquel le dispositif est relié par un fil électrique ou une liaison radio-fréquence, ou encore un contacteur disposé à proximité du conducteur.

Le pointeau présente une extrémité conique avec un angle compris entre 40° et 60°, la charge pyrotechnique produisant lors du déclenchement une énergie comprise entre 50 et 250 bars dans un temps inférieure à une milliseconde, et de préférence une énergie comprise entre 100 et 150 bars dans un temps inférieure à une milliseconde.

De préférence, le dispositif comporte en outre une cage fermée et étanche, solidaire de ladite semelle et entourant ledit composant pyrotechnique et ladite cage cylindrique.

Selon une variante, le dispositif comporte également un bouton d'activation.

L'invention concerne aussi un système de bris de vitre automatique constitué par au moins un dispositif susvisé et par un capteur de fumée et/ou de température délivrant au repos un signal électrique, et interrompant l'émission dudit signal en cas de détection de fumée et/ou de détection d'une température dépassant une valeur-seuil.

Avantageusement le système comprend en outre un bouton d'activation centralisé et un capteur de présence d'un conducteur.

### Description détaillée d'un exemple de réalisation

La présente invention sera mieux comprise à la lecture de la description qui suit, concernant un exemple non limitatif de réalisation illustré par les dessins annexés où :
- La figure 1 représente une vue schématique, en coupe partielle d'un dispositif selon l'invention.
- La figure 2 représente une vue en détail de la tête et de la pointe
- La figure 3 représente un le schéma de principe électrique d'une variante de réalisation.
- La figure 4 représente une vue de la table d'état du circuit électronique.

### Description du dispositif

Le dispositif selon l'exemple décrit est destiné à être collé sur la vitre (1) à équiper.

Il présente à cet effet une semelle (2) présentant une surface frontale plane. Le collage est effectué de manière connue, par exemple avec une colle acrylate photopolymérisable tels que la colle verre / métal DELO PHOTOBOND (nom commercial) ou la colle SUPER GLUE 3 SPÉCIALE VERRE de la société LOCTITE (nom commerciaux). La surface frontale plane de la semelle (2) peut aussi être recouverte d'un adhésif protégé avant la pose sur une vitre par un film de protection.

Le dispositif présente un corps cylindrique dans l'exemple décrit se terminant par une semelle (2) en acier, de forme discale, avec un perçage central (6) pour le passage d'un pointeau (4).

Alternativement, la surface de la semelle présente une première collerette périphérique (8) et une deuxième collerette (9) entourant le perçage central (6). La surface intérieure est prolongée par une cage cylindrique (7). La semelle (2) prolongée par la cage (7) sont réalisées par usinage d'un bloc en acier ou par fonderie.

La cage (7) présente un canal tubulaire dans lequel est inséré en force l'extrémité tubulaire (10) d'un composant explosif, tel que l'octanitrocubane, la poudre noire ou plus généralement toute charge capable de fournir un volume de quelques centimètres cube avec une énergie de 135 bars en moins d'une milliseconde.

Le déclenchement est effectué de manière connue par un initiateur électrique (3).

L'extrémité tubulaire (10) contient un pointeau (4) en acier présentant une tête (12) dont la section correspond à la section intérieure de l'extrémité tubulaire (10). Cette tête est prolongée par une tige (13) se terminant par une pointe (14) conique, formant un angle de conicité compris entre 30° et 70°.

La longueur de la tige est déterminée en fonction des caractéristiques de la vitre sur laquelle le dispositif est destiné à être installé. Elle est déterminée pour assurer le transperçage d'un simple vitrage et le bris d'un double vitrage.

L'ensemble est entouré par une cage étanche (5) soudée sur la semelle (2) et présentant un passage étanche des câbles électriques pour le raccordement optionnel à un câblage du véhicule.

Optionnellement, le dispositif comporte en outre un bouton de déclenchement manuel (20), qui est actif seulement dans certaines circonstances. Un circuit électronique autoalimenté (21) commande le déclenchement de l'initiateur comme décrit ci-après.

### Commande du déclenchement

La cinématique de déclenchement est initiée par des capteurs équipant le véhicule délivrant un signal dont la disparition résulte de la détection de chaleur et/ou de fumées. Les capteurs complémentaires délivrent une information relative à la détection d'un choc et de l'arrêt complet du véhicule.

Dans le cas d'apparition de fumée ou de détection d'une température supérieure à une valeur seuil, le capteur interrompt l'émission du signal. De même en cas de défaillance, notamment de coupure du circuit électrique ou arrachage du capteur, le signal est interrompu.

L'activation du système de bris de glace résulte de la disparition du signal délivré par le capteur de chaleur et/ou de fumée d'une part et d'autre part des paramètres de déclenchement en fonction de l'arrêt du véhicule et/ou de la détection d'un choc.

Lorsque le système est activé, le conducteur du véhicule peut commander le déclenchement des dispositifs de bris de glace du véhicule. En cas d'indisponibilité du conducteur, détecté par exemple par un capteur de présence sur le siège du conducteur ou un intervalle de temps supérieure à une valeur seuil, entre l'activation et l'action sur le bouton de commande, les boutons d'activation équipant individuellement chaque dispositif deviennent actifs.

Préalablement au déclenchement des dispositifs, on commande par ailleurs un signal sonore et/ou lumineux.

### Description détaillée de la pointe

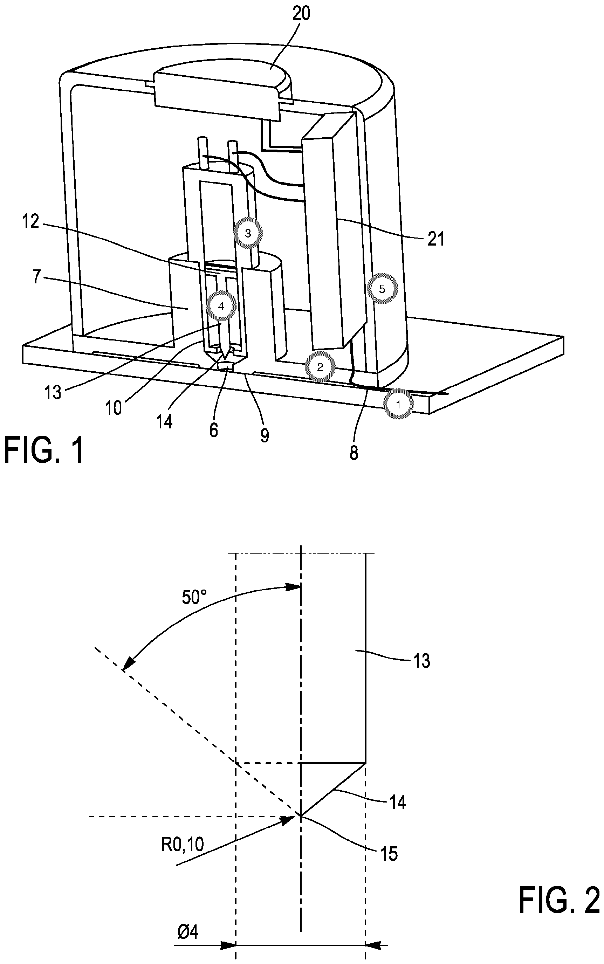

La figure 2 représente une vue détaillée de la tige (13) se terminant par une pointe (14). La tige présente une section ronde de 4mm. La tige (13) se termine par une pointe (14) conique avec une pente de 50° dont l'extrémité (15) présente un rayon de 0,1 millimètre.

### Variante de réalisation

Selon une variante préférée de réalisation, le corps (5) intègre un module électronique (21) comprenant une source d'énergie autonome, par exemple une pile électrique, une batterie ou une super capacité, associée à un contacteur activable depuis la surface extérieure du corps (5), ou encore un générateur piézoélectrique délivrant une impulsion électrique à l'initiateur électrique (3).

Le passager d'un autocar accidenté peut ainsi provoquer l'ouverture d'une vitre sans effort et sans connaissances particulières, en appuyant simplement sur le bouton de déclenchement (20).

Pour éviter un déclenchement intempestif par inadvertance, maladresse ou vandalisme, le dispositif comporte en outre un circuit électronique ou électromagnétique commandé par un signal électrique provenant d'une commande du véhicule, et commandant la mise hors circuit du bouton d'actionnement manuel en présence dudit signal électrique. L'absence de signal électrique autorise le déclenchement de l'initiateur électrique (3) par un signal produit par l'action sur le bouton de commande.

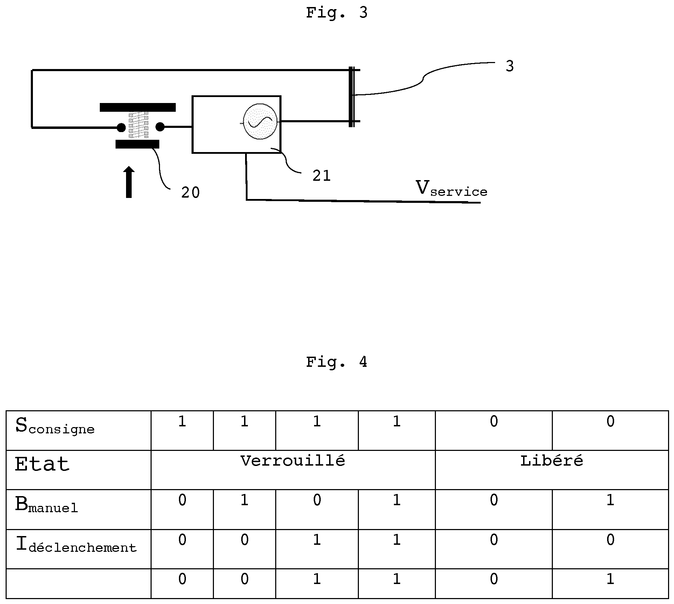

La figure 4 représente la table d'état du circuit de déclenchement. Lorsque la présence d'un signal électrique provenant du véhicule est détectée par le module électronique (21), le bouton de déclenchement (20) est inactif : l'action sur le bouton (20) ne produit aucun effet, ce qui évite le déclenchement par malveillance ou inadvertance.

Le déclenchement peut être commandé par un signal de déclenchement transmis par le câblage du véhicule, par exemple par un calculateur recevant des informations de différentes capteurs de choc, d'inclinaison, de température, de présence du conducteur et/ou de fumée. Ce signal peut prendre la forme d'une modulation de type PWM du signal de base, ou d'une surtension, ou de toute autre forme permettant au circuit (21) de détecter un changement d'état du signal électrique provenant du véhicule.

En l'absence d'un tel signal, le module électrique (21) devient passant, et une fermeture du contacteur (20) provoque le déclenchement de l'initiateur (3).

Le signal électrique provenant du véhicule ainsi que le signal de déclenchement provenant du véhicule sont transmis dans l'exemple susvisé par un câblage. Il est bien évident que lesdits signaux peuvent également être transmis par radiofréquences. Dans ce cas le système de brise-vitre intègre un module radiofréquence avec un protocole de type Bluetooth ou Loran, ou plus généralement tout protocole de communication standard utilisé pour des transmissions à courtes distances dans des véhicules de transport.

Selon une option, le module électronique (21) comporte en outre un temporisateur commandant une interruption du circuit après un délai prédéterminée d'absence de signal de service provenant du véhicule. La réactivation est commandée par la détection d'un signal de service provenant du véhicule.

## Revendications

1. - Dispositif de bris de vitre automatique formé par un corps (5) comportant un pointeau (4) activé par une charge pyrotechnique et une semelle (2) présentant une surface extérieure revêtue d'un moyen de collage sur une vitre, ladite semelle (2) étant prolongée à la surface opposée par une cage cylindrique définissant une cavité tubulaire à l'intérieure de laquelle est insérée l'extrémité tubulaire d'un composant pyrotechnique dont déclenchement est effectué par un initiateur électrique, ledit composant pyrotechnique comprenant dans sa partie arrière une charge pyrotechnique et dans sa partie avant ledit pointeau (4), ledit dispositif constitué par un bouton de déclenchement (20) intégré audit dispositif et un moyen de liaison filaire ou sans fil avec un moyen d'activation distant
- ledit corps (5) intégrant un module électronique (21) comprenant une source d'énergie autonome, associée à un contacteur activable depuis la surface extérieure du corps (5), délivrant une impulsion électrique à l'initiateur électrique (3)
- **caractérisé en ce que** ledit module électronique (21) est commandé par un signal électrique provenant d'une commande du véhicule commandant la mise hors circuit du bouton de déclenchement (20) en présence dudit signal électrique, l'absence de signal électrique autorisant le déclenchement de l'initiateur électrique (3) par un signal produit par l'action sur ledit bouton de déclenchement (20).

2. - Dispositif de bris de vitre automatique selon la revendication 1 **caractérisé en ce que** ledit module électronique (21) comporte en outre un temporisateur commandant une interruption du circuit après un délai prédéterminée d'absence de signal de service provenant du véhicule, la réactivation étant commandée par la détection d'un signal de service provenant du véhicule

3. - Dispositif de bris de vitre automatique selon la revendication 1 **caractérisé en ce que** ledit pointeau (4) présente une extrémité conique (14) avec un angle compris entre 30° et 70°, la charge pyrotechnique produisant lors du déclenchement une énergie comprise entre 50 et 250 bars dans un temps inférieure à une milliseconde.

4. - Dispositif de bris de vitre automatique selon la revendication 1 **caractérisé en ce qu'**il comporte en outre une cage fermée et étanche, solidaire de ladite semelle et entourant ledit composant pyrotechnique et ladite cage cylindrique.

5. - Système de bris de vitre automatique **caractérisé en ce qu'**il est constitué par au moins un dispositif conforme à la revendication 1 et par un capteur de fumée et/ou de température délivrant au repos ledit signal électrique commandant la mise hors circuit du bouton de déclenchement (20), et interrompant l'émission dudit signal en cas de détection de fumée et/ou de détection d'une température dépassant une valeur-seuil.

6. - Système de bris de vitre automatique selon la revendication précédente **caractérisé en ce qu'**il comprend en outre un bouton d'activation centralisé et un capteur de présence d'un conducteur.

7. - Véhicule de transport collectif comportant des issues de secours fermées par des vitres **caractérisé en ce que** chacune desdites vitres comporte un système de bris de vitre automatique conforme à la revendication 1, dont la semelle (2) est collée sur la surface intérieure de ladite vitre.

8. - Véhicule de transport collectif selon la revendication précédente **caractérisé en ce qu'**il comprend en outre un système d'activation automatique desdits brises-vitres.

## Patentansprüche

1. Automatische Glasbrechvorrichtung, die aus einem Körper (5), der einen Körner (4) aufweist, der durch eine pyrotechnische Ladung aktiviert wird, und einer Fußplatte (2) ausgebildet ist, die eine Außenoberfläche vorweist, die mit einem Mittel zum Kleben auf eine Glasscheibe beschichtet ist, wobei die Fußplatte (2) zu der gegenüberliegenden Oberfläche durch einen zylindrischen Käfig verlängert ist, der einen röhrenförmigen Hohlraum definiert, in dessen Innerem das röhrenförmige Ende einer pyrotechnischen Komponente eingesetzt ist, dessen Auslösung durch einen elektrischen Zünder erfolgt, die pyrotechnische Komponente umfassend in ihrem hinteren Teil eine pyrotechnische Ladung und in ihrem vorderen Teil den Körner (4), wobei die Vorrichtung aus einem Auslöseknopf (20), der in die Vorrichtung integriert ist, und einem drahtgebundenen oder drahtlosen Verbindungsmittel mit einem Fernaktivierungsmittel besteht
- wobei der Körper (5) ein elektronisches Modul (21) integriert, umfassend eine autonome Energiequelle, die mit einem Kontaktgeber verknüpft ist, der von der Außenoberfläche des Körpers (5) aktivierbar ist, der einen elektrischen Impuls an den elektrischen Zünder (3) liefert
- **dadurch gekennzeichnet, dass** das elektronische Modul (21) durch ein elektrisches Signal gesteuert wird, das von einer Fahrzeugsteuerung stammt, die das Abschalten des Auslöseknopfs (20) bei Vorhandensein des elektrischen Signals steuert, wobei das Fehlen des elektrischen Signals die Auslösung des elektrischen Zünders (3) durch ein Signal gestattet, das durch die Einwirkung auf den Auslöseknopf (20) produziert wird.

2. Automatische Glasbrechvorrichtung nach Anspruch 1,
**dadurch gekennzeichnet, dass** das elektronische Modul (21) ferner einen Zeitgeber umfasst, der eine Unterbrechung des Stromkreises nach einer zuvor bestimmten Verzögerung des Fehlens eines Dienstsignals steuert, das von dem Fahrzeug stammt, wobei die Reaktivierung durch die Erkennung eines Dienstsignals gesteuert wird, das von dem Fahrzeug stammt.

3. Automatische Glasbrechvorrichtung nach Anspruch 1,
**dadurch gekennzeichnet, dass** der Körner (4) ein konisches Ende (14) mit einem Winkel zwischen 30° und 70° vorweist, wobei die pyrotechnische Ladung bei dem Auslösen in einer Zeit von weniger als einer Millisekunde eine Energie zwischen 50 und 250 bar produziert.

4. Automatische Glasbrechvorrichtung nach Anspruch 1,
**dadurch gekennzeichnet, dass** es ferner einen verschlossenen und dichten Käfig aufweist, der mit der Fußplatte fest verbunden ist und die pyrotechnische Komponente und den zylindrischen Käfig umgibt.

5. Automatisches Glasbrechsystem, **dadurch gekennzeichnet, dass** es aus mindestens einer Vorrichtung nach Anspruch 1 und aus einem Rauch- und/oder Temperatursensor besteht, der in dem Ruhezustand das elektrische Signal liefert und das Abschalten des Auslöseknopfs (20) steuert, und
Unterbrechen der Emission des Signals im Falle einer Raucherkennung und/oder Erkennung einer Temperatur, die einen Schwellenwert überschreitet.

6. Automatisches Glasbrechsystem nach dem vorstehenden Anspruch, **dadurch gekennzeichnet, dass** es ferner einen zentralisierten Aktivierungsknopf und einen Fahreranwesenheitssensor umfasst.

7. Fahrzeug für den öffentlichen Personenverkehr, das Notausgänge aufweist, die durch Glasscheiben verschlossen sind, **dadurch gekennzeichnet, dass** jede der Glasscheiben ein automatisches Fensterbrechsystem nach Anspruch 1 umfasst, dessen Fußplatte (2) auf die Innenoberfläche der Glasscheibe geklebt ist.

8. Fahrzeug für den öffentlichen Personenverkehr nach dem vorstehenden Anspruch, **dadurch gekennzeichnet, dass** es ferner ein automatisches Aktivierungssystem der Fensterbrecher umfasst.

## Claims

1. Automatic glass-breaking device formed by a body (5) comprising a needle (4) activated by a pyrotechnic charge and a base plate (2) having an outer surface coated with a means for adhering to a pane of glass, said base plate (2) being extended to the opposite surface by a cylindrical frame defining a tubular cavity inside which is inserted the tubular end of a pyrotechnic component, the triggering of which is performed by an electrical initiator, said pyrotechnic component comprising a pyrotechnic charge in its rear portion and said needle (4) in its front portion, said device consisting of a trigger button (20) integrated into said device and a means of wired or wireless connection with a remote activation means
- said body (5) including an electronic module (21) comprising a self-contained power source associated with a contact switch activatable from the outer surface of the body (5), for delivering an electrical pulse to the electrical initiator (3)
- **characterized in that** said electronic module (21) is controlled by an electrical signal from a vehicle control controlling the deactivation of the trigger button (20) in the presence of said electrical signal, the absence of an electrical signal enabling the triggering of the electrical initiator (3) via a signal produced by action on said trigger button (20).

2. Automatic glass-breaking device according to claim 1, **characterized in that** said electronic module (21) further comprises a timer controlling an interruption of the circuit after a predetermined period of absence of a service signal from the vehicle, the reactivation being controlled by the detection of a service signal from the vehicle.

3. Automatic glass-breaking device according to claim 1,
**characterized in that** said needle (4) has a conical end (14) with an angle of between 30° and 70°, the pyrotechnic charge, when triggered, producing an energy of between 50 and 250 bar in less than one millisecond.

4. Automatic glass-breaking device according to claim 1, **characterized in that** it further comprises a closed and sealed frame which is rigidly connected to said base plate and surrounds said pyrotechnic component and said cylindrical frame.

5. Automatic glass-breaking system, **characterized in that** it consists of at least one device according to claim 1 and of a smoke and/or temperature sensor which delivers, at rest, said electrical signal controlling the deactivation of the trigger button (20), and interrupts the transmission of said signal when smoke is detected and/or temperature exceeding a threshold value is detected.

6. Automatic glass-breaking system according to the preceding claim, **characterized in that** it further comprises a centralized activation button and a sensor for detecting the presence of a driver.

7. Public transport vehicle comprising emergency exits closed by panes of glass, **characterized in that** each of said panes of glass comprises an automatic glass-breaking system according to claim 1, the base plate (2) of which is adhered to the inner surface of said glass pane.

8. Public transport vehicle according to the preceding claim,
**characterized in that** it further comprises a system for automatically activating said glass breakers.
